# EUROPEAN PATENT SPECIFICATION

(11) **EP 1 698 510 B1**
(45) Date of publication and mention of the grant of the patent: **27.06.2007**
(21) Application number: 06075445.4
(22) Date of filing: 28.02.2006
(51) Int. Cl.: B60N 2/28

(54) **Child vehicle seat**
Fahrzeug-Kindersitz
Siège enfant pour véhicule

(30) Priority: 03.03.2005 NL 1028449
(43) Date of publication of application: 06.09.2006
(73) Proprietor: Maxi Miliaan B.V., 5705 DG Helmond (NL)
(72) Inventor: Fransen, Martinus Theodorus, 5663 EN Geldrop (NL); Lutkemeier, Eduard Cornelis, 5211 DC 's-Hertogenbosch (NL)
(74) Representative: Veldman-Dijkers, Cornelia G. C.

(56) References cited:
- EP-A- 0 504 618
- WO-A-98/25789
- FR-A- 2 778 376

## Description

The invention relates to a child vehicle seat comprising a chassis and a seat comprising a seat portion and back support joining said seat portion, which seat is pivotally connected to the chassis about a pivot axis, and can be pivoted from first position to second position under the spring force of a spring.

Such child vehicle seats are used inter alia on bicycles and in cars, and the seat can be moved to a more upright or a less upright position in dependence on the wishes of a child seated in the child vehicle seat. The less upright position is more pleasant when the child wants to sleep, the more upright position is more comfortable when the child is awake and wants to look outside or play, for example. It is also possible, of course, to position the seat in more than two different positions.

Usually an adult will have to release a lock in order to move the seat from one position to the other position, after which the seat can be pivoted to the other position. The force of gravity in the form of the weight of the seat and the child present therein will assist the adult in exerting the force required for moving the seat to said one position, so that the adult only needs to exert a small force on the seat. When the seat is to be moved to the other position, the adult will have to overcome the influence of the force of gravity in order to do so, in which case a relatively large force must be exerted on the seat.

A child vehicle seat according to the preamble of claim 1 is known from FR 2,778,376, in which a gas spring assists in the pivoting of the seat about a pivot axis. A child seated in the child seat is secured in the child seat by means of belts, whilst the chassis of the child seat is fixed in position by means of vehicle seat belts present in the vehicle.

The object of the invention is to provide a child vehicle seat in which relatively little force is required both for moving the seat from the first position to the second position and vice versa, whilst the vehicle seat belt extends at least partially over the seat, with the child vehicle seat being firmly connected to the vehicle in both positions.

This object is achieved with the child vehicle seat according to the invention in that the back support is provided with a belt guide on a side remote from the seat portion, whilst the pivot axis is positioned near the belt guide.

Since the pivot axis is positioned near the belt guide, in which the shoulder belt of the vehicle seat belt comes into contact with the upper side of the child vehicle seat, the path of the shoulder belt does not change upon pivoting of the seat. This is considered to be advisable by various legislating bodies, since the shoulder belt will be connected to the child vehicle seat in the same manner in any position of the child vehicle seat in that case.

In such a case, however, the position of the centre of mass of the seat and a child present therein relative to the pivot axis will be such that a relatively large force needs to be overcome for moving the seat from the first position to the second position. The first position as meant herein is preferably the position in which the force of gravity needs to be overcome for moving the seat to the second position. With the child vehicle seat according to the invention, however, part of said force will be supplied by the spring, so that the force to be exerted on the seat by the adult will nevertheless be relatively limited. The force of gravity will assist the adult in exerting the force required for moving the seat from the second position to the first position, but the spring force will have to be overcome. The force to be exerted by the adult is relatively limited for both movements in this case.

In addition, the spring enables a relatively great freedom of design, because the position of the pivot axis and that of the centre of gravity are substantially independent of each other as a result of the action of the spring.

Another embodiment of the child vehicle seat according to the invention is characterized in that the first position of the seat is a more upright position than the second position.

It has become apparent that the assistance of spring force is desirable especially upon pivoting from the more upright position to the less upright position.

Yet another embodiment of the child vehicle seat according to the invention is characterized in that the spring is positioned between the seat and the chassis.

In this way the spring will usually be spaced from the pivot axis by a relatively large distance, so that a force to be exerted by the spring will result in a relatively large moment, as a result of which the force to be exerted by the adult will be relatively small.

The invention will now be explained in more detail with reference to the drawings, in which:
Figure 1 is a side view of a child vehicle seat according to the invention in a first position thereof;
Figure 2 shows the child vehicle seat of figure 1 in a second position.

Like parts are indicated by the same numerals in the figures.

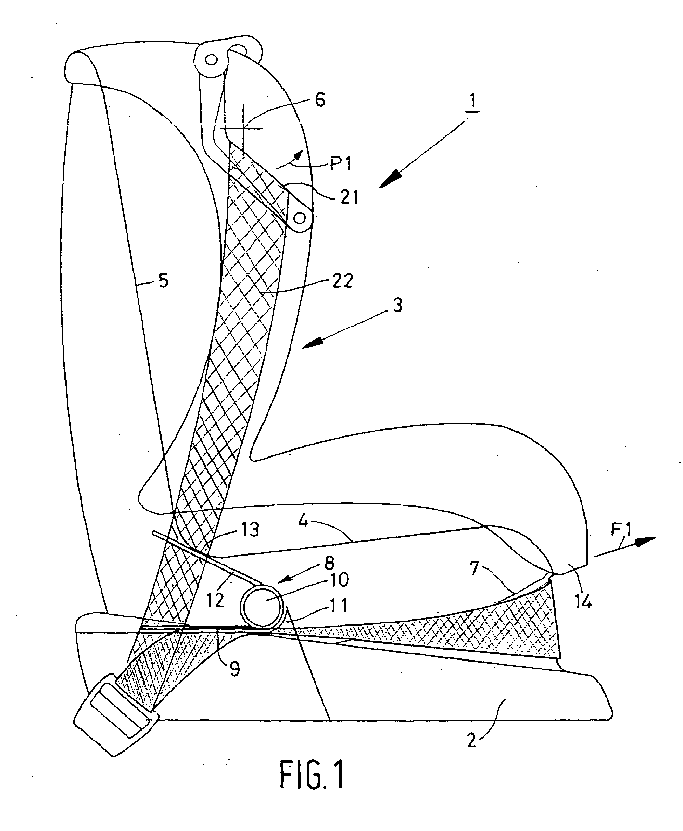

Figure 1 shows a child vehicle seat 1, which comprises a chassis 2 and a seat 3 that is supported by the chassis 2. The seat 3 comprises a seat portion 4 and a back support 5 joining said seat portion. The back support 5 is provided with a belt guide 21 for a belt 22 on a side remote from the seat portion 4.

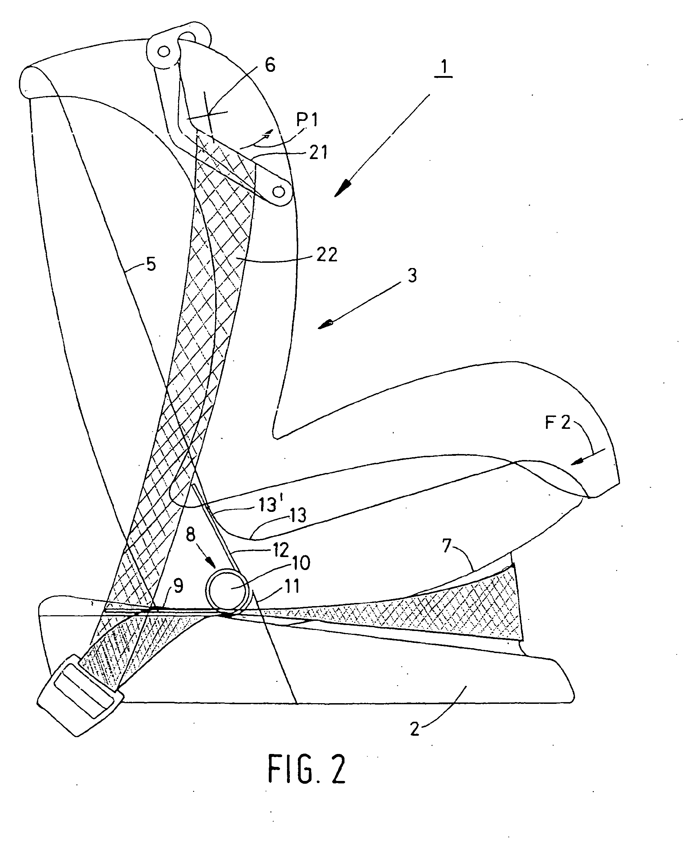

The seat 3 is pivotable about a pivot axis 6 relative to the chassis 2 between at least the first position that is shown in figure 1 and the second position that is shown in figure 2. The child vehicle seat 1 is provided with means for blocking or locking the seat 1 in any position.

The pivot axis 6 is a virtual axis, which is defined by a guide 7 provided in the chassis 2, in which the seat 3 is slidably supported.

The child vehicle seat as discussed so far is known per se and will not be explained in more detail herein, therefore.

The child vehicle seat 1 according to the invention further comprises a wire spring 8, which comprises a first leg 9, which abuts against the chassis 2, a coil-shaped portion 10, which abuts against a support 11 of the chassis 2 that is adapted to the coil shape 10, and a second leg 12, which abuts against a wall 13 of the seat 3 under spring force.

When a child is seated in the seat 3 and an adult wants to move the seat 3 from the first, more upright position that is shown in figure 1 to the second, less upright position, the adult will take hold of a front side 14 of the seat 3, release the lock by which the seat 3 is held in the position in question and exert a force in the direction indicated by the arrow F1, as a result of which the seat 3 will be pivoted about the pivot axis 6 in the direction indicated by the arrow P1.

Once the seat 3 has been unlocked, the spring 8 will exert a spring force on the seat 3, as a result of which the seat 3 will likewise be pivoted about the pivot axis 6 in the direction indicated by the arrow P1.

The force to be exerted on the seat 3 by the adult for moving the seat 3 to the second position that is shown in figure 2 is smaller than the force that is to be exerted when the spring 8 is not provided, therefore. During said pivoting, the point of contact between the second leg 12 and the seat 3 moves to the position 13' on the wall 13. The effective length of the leg 12 is thus increased. As a result, the force exerted by the spring will remain substantially constant.

Once the seat 3 has taken up the second position, the seat 3 will be locked in said position.

When an adult which is to move the seat 3 and the child seated therein from the second position that is shown in figure 2 to the first position that is shown in figure 1, the lock is released again, after which the adult will exert a force in the direction indicated by the arrow F2 on the seat 3. The centre of mass of the seat 3 and the child present therein is positioned between the pivot axis 6 and the front side 14 of the seat 3. As a result, a force will be exerted on the seat 3 under the action of gravity, which force will assist in the pivoting of the seat 3 in the opposite direction of the arrow P1. On the other hand, a force will have to be provided for moving the second leg 12 of the spring 8 back to the position that is shown in figure 1.

Preferably, the spring force to be exerted by the spring 8 is calculated so that the moment exerted by the spring force relative to the pivot axis 6 substantially corresponds to the moment resulting from the average force that is to be expected from gravity.

It is also possible, of course, to provide the spring at a different position in the child vehicle seat 1.

It is also possible to use a gas spring or a leaf spring instead of a wire spring.

The position of the pivot axis can be optimised in relation to the belt path, whilst all the same no undesirably large forces will be required for pivoting the seat as a result of the use of the spring.

Since the point of contact between the seat and the leg 12 is moved upon pivoting of the seat, a substantially constant spring force will be experienced.

It is also possible to use additional springs that will only come into action after a specified degree of pivoting has taken place.

## Claims

1. A child vehicle seat (1) comprising a chassis (2) and a seat (3) comprising a seat portion (4) and back support (5) joining said seat portion (4), which seat (3) is pivotally connected to the chassis (2) about a pivot axis (6), and can be pivoted from first position to second position under the spring force of a spring (8), **characterized in that** the back support (5) is provided with a belt guide (21) on a side remote from the seat portion (4), whilst the pivot axis (6) is positioned near the belt guide (21).

2. A child vehicle seat (1) according to claim 1, **characterized in that** the first position of the seat (3) is a more upright position than the second position.

3. A child vehicle seat (1) according to claim 1, **characterized in that** said spring (8) is positioned between the seat (3) and the chassis (2).

## Patentansprüche

1. Kinderfahrzeugsitz (1) enthaltend ein Chassis (2) und einen Sitz (3) mit einem Sitzabschnitt (4) und einer Rückenlehne (5), die mit dem Sitzabschnitt (4) zusammentrifft, welcher Sitz (3) mit dem Chassis (2) um eine Schwenkachse (6) schwenkbar verbunden ist, und von einer ersten Position in eine zweite Position unter der Federkraft einer Feder (8) geschwenkt werden kann, **dadurch gekennzeichnet, dass** die Rückenlehne (5) mit einer Gurtführung (21) an einer von dem Sitzabschnitt (4) entfernten Seite versehen ist, während die Schwenkachse (6) nahe der Gurtführung (21) angeordnet ist.

2. Kinderfahrzeugsitz (1) nach Anspruch 1, **dadurch gekennzeichnet, dass** die erste Position des Sitzes (3) eine aufrechtere Position als die zweite Position ist.

3. Kinderfahrzeugsitz (1) nach Anspruch 1, **dadurch gekennzeichnet, dass** die Feder (8) zwischen dem Sitz (3) und dem Chassis (2) angeordnet ist.

## Revendications

1. Siège enfant pour véhicule (1) comprenant un châssis (2) et un siège (3) comprenant une portion de siège (4) et un support arrière (5) rejoignant ladite portion de siège (4), lequel siège (3) est relié de manière pivotante au châssis (2) autour d'un axe de pivotement (6) et peut être pivoté d'une première position vers une seconde position sous l'action élastique d'un ressort (8), **caractérisé en ce que** le support arrière (5) est muni d'un guidage de ceinture (21) sur un côté distant par rapport à la portion de siège (4), tandis que l'axe de pivotement (6) est positionné à proximité du guidage de ceinture (21).

2. Siège enfant pour véhicule (1) selon la revendication 1, **caractérisé en ce que** la première position du siège (3) est une position plus redressée que la seconde position.

3. Siège enfant pour véhicule (1) selon la revendication 1, **caractérisé en ce que** ledit ressort (8) se trouve entre le siège (3) et le châssis (2).
